# EUROPEAN PATENT SPECIFICATION

(11) **EP 2 615 442 B1**
(45) Date of publication and mention of the grant of the patent: **09.08.2017**
(21) Application number: 12172542.8
(22) Date of filing: 19.06.2012
(51) Int. Cl.: G01N 1/22

(54) **Apparatus for capturing a gas flow**
Vorrichtung zum Erfassen eines Gasstromes
Appareil pour capturer un flux gazeux

(30) Priority: 16.01.2012 SI 201200012
(43) Date of publication of application: 17.07.2013
(73) Proprietor: Gozdarski institut Slovenije, 1000 Ljubljana (SI)
(72) Inventor: Ferlan, Mitja, 1352 Preserje (SI)
(74) Representative: Ivancic, Bojan

(56) References cited:
- WO-A1-2010/069030
- US-A- 4 445 788
- US-A1- 2007 144 276
- US-A1- 2012 000 298

## Description

The present invention relates to an apparatus for capturing a gas flow, in particular a gas flow from the ground, preferably a gas flow originating by natural decay of the organic substances in the ground such as dead plant roots and similar.

Apparatus for capturing a gas flow has been disclosed in the document US 2007/144276 A1. Said apparatus comprises a base plate, a lift-and-rotate mechanism comprising a first generally cylindrical column affixed to the base plate, a second generally cylindrical column positioned within the first generally cylindrical column, the second generally cylindrical column including a helical slot and being rotatable about an axis, a third generally cylindrical column positioned within the second generally cylindrical column, the third generally cylindrical column including a hole and being rotatable about the axis and moveable along the axis, and a chamber coupled with the third generally cylindrical column, wherein the lift-and-rotate mechanism is operative to move the chamber between first and second positions. In order for the chamber to execute both a linear movement and the rotational movement the apparatus must incorporate intricate mechanism, such as a helical slot made in the guide and the pin. In addition, a single guide does not provide sufficient stability for the chamber.

It is the object of the present invention to create an apparatus for capturing a gas flow which eliminates drawbacks of the known apparatus.

According to the invention, the object as set above is solved by an apparatus for capturing a gas flow, in particular a gas flow from the ground, according to claim 1. Further aspects of the invention are disclosed in the dependent claims. The invention is further described in detail on the basis of the preferred embodiment, and with a reference to the accompanying drawing, where it is shown, in a three dimensional view, an apparatus for capturing a gas flow according to the invention.

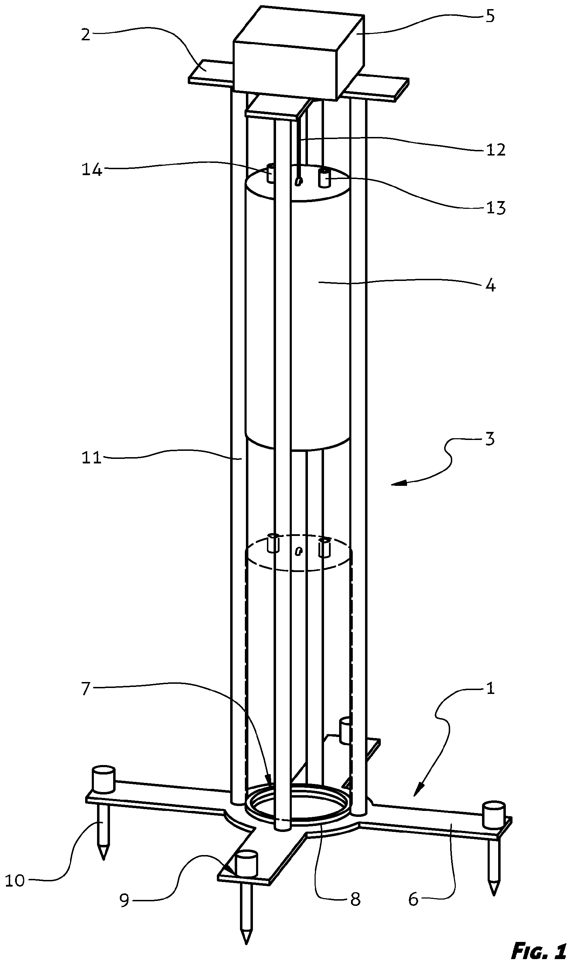

An apparatus for capturing a gas flow according to the invention comprises a carrier base 1, a top holder 2, a plurality of vertical bar-like guides 3 comprising at least three bars, a chamber 4 for capturing a gas flow guided by means of said bar-like guides 3, and a device 5 for controlling and operating said chamber 4. Said carrier base 1 is formed, in the shown embodiment, as a symmetrical carrier base comprising a plurality of an area-intensive legs 6, said base 1 having a circular opening 7 arranged approximately in the central area of said base 1. Said opening 7 is surrounded over the entire edge area thereof by a gasket 8 onto which said chamber 4 abuts when set into the lowered position thereof (in Fig. 1 shown with a dashed line). The free end of each said leg 6 comprises a fixing through-hole 9, a fixing tenon 10, intended for fixing said apparatus for capturing a gas flow to the ground, being put through each said fixing through-hole 9.

Said plurality of bar-like guides 3 is arranged between said carrier base 1 and said top holder 2, said plurality comprising at least three equal bars 11. Said bars 11 are arranged around said opening 7 in a manner that they are equally spaced over the circumference of said opening 7 and extend mutually in parallel in the area between said carrier base 1 and said top holder 2.

The device 5 for controlling and operating said chamber 4 for capturing a gas flow is placed on top of said top holder 2. Said chamber 4 is connected by means of a flexible holding means 12 with said device 5. It is provided for, in the embodiment shown, that said flexible means 12 is selected as a steel stranded rope or a thin chain or similar, the first end thereof being linked to the chamber 4 whereas the second end thereof is linked to a drum, known per se, arranged in said device 5. Said chamber 4 may be lowered by means of said device 5 into the lower operating position so that it is seated onto said gasket 8, or may be lifted in the upper idle position. Thus, said flexible holding means 12 either unwinds or winds up said drum.

In the shown embodiment said chamber 4 is provided at the side facing said top holder 2 with a pair of tubular projections 13, 14 being connected with said device 5 by means of the first hose pair, not shown. Said device 5 is further connected by means of an additional hose pair, not shown, with a remote measuring device known per se. A pump know per se in said remote measuring device conveys a gas flow via one of said hoses of said first hose pair from said chamber 4, when the latter is lowered into the operating position, and forwards the gas flow into said measuring device via one of said hoses of said additional hose pair. Each second hose of said first hose pair and of said additional hose pair is intended for the circulation of the gas flow to be treated. In addition, said device 5 is data-connected with said measuring device, for instance by means of wired connection, optical cable, wireless and similar.

According to the present invention it is further provided that at least one of said fixing tenons 10 is simultaneously formed as a temperature and/or humidity sensor of the ground wherefrom the gas flow is captured. The data from said ground temperature and/or humidity sensor are read by means of said device 5 being designed in order to simultaneously connect in series multiple apparatuses for capturing a gas flow according to the invention to a single remote measuring device.

The gas flow capturing and, as a result, measuring of the captured gas flow is triggered either by means of a remote measuring device or by means of said device 5. Said device 5 lowers said chamber 4 in the lower operating position in order to abuts said gasket 8, thus preventing the surrounding air to enter the chamber 4. The pump in said remote measuring device is switched on and begins with the suction of the gas flow via said circulating hose. Simultaneously, gases which exit ground in the area of said opening 7 within the carrier base 1 are drawn off and conveyed via said hoses into said remote measuring device. When the measurement is finished, said pump is stopped on the basis of the appropriate signal, and said chamber 4 is lifted up by means of said device 5 into the upper idle position.

## Claims

1. Apparatus for capturing a gas flow, in particular a gas flow from the ground, preferably a gas flow originating by natural decay of the organic substances in the ground such as dead plant roots and similar comprising a chamber for capturing a gas flow (4), a carrier base (1) formed with a circular opening (7) arranged approximately in a central area of said carrier base (1), said opening (7) being surrounded over the entire edge area thereof by a gasket (8) to cooperate with said chamber (4), a top holder (2) and a device for controlling and operating said chamber (4), ***characterised in that*** said apparatus comprises bar-like guides (3) comprising at least three bars (11) arranged around said opening (7) in a manner that they are equally spaced over the circumference of said opening (7) and extend mutually in parallel in the area between said carrier base (1) and said top holder (2), wherein the chamber (4) for capturing a gas flow is guided by means of said guides (3).

2. Apparatus for capturing a gas flow according to claim 1 ***characterised in that*** the carrier base (1) is formed as a symmetrical carrier base comprising a plurality of an area-intensive legs (6), the free end of each said leg (6) comprises a fixing through-hole (9), a fixing tenon (10) intended for fixing said apparatus for capturing a gas flow to the ground being put through each said fixing through-hole (9).

3. Apparatus for capturing a gas flow according to claims 1 to 2 ***characterised in that*** at least one of said fixing tenons (10) is formed as a temperature and/or humidity sensor of the ground wherefrom the gas flow is captured.

## Patentansprüche

1. Vorrichtung zum Auffangen eines Gasstroms, insbesondere eines Gasstroms aus dem Boden, vorzugsweise eines Gasstroms, der bei der natürlichen Verrottung von organischen Stoffen im Boden, beispielsweise von abgestorbenen Pflanzenwurzeln und dergleichen, entsteht, umfassend eine Kammer zum Auffangen eines Gasstroms (4), eine Trägerbasis (1), die mit einer kreisförmigen Öffnung (7) ausgebildet ist, welche näherungsweise in der Mitte der Fläche der Trägerbasis (1) angeordnet ist, wobei die Öffnung (7) entlang ihres gesamten Randbereichs von einer Dichtung (8) umgeben ist, um mit der Kammer (4) zusammenzuwirken, eine obere Halterung (2) und eine Einheit zur Kontrolle und Bedienung der Kammer (4), ***dadurch gekennzeichnet*, *dass*** die Vorrichtung stangenartige Führungen (3) umfasst, die wenigstens drei Stangen (11) beinhalten, die um die Öffnung (7) in einer Weise angeordnet sind, dass sie um den Umfang der Öffnung (7) herum gleichmäßig verteilt sind und sich gegenseitig parallel in dem Bereich zwischen der Trägerbasis (1) und der oberen Halterung (2) erstrecken, wobei die Kammer zum Auffangen eines Gasstroms mithilfe der Führungen (3) geführt wird.

2. Vorrichtung zum Auffangen eines Gasstroms nach Anspruch 1, ***dadurch gekennzeichnet*, *dass*** die Trägerbasis (1) als eine symmetrische Trägerbasis ausgebildet ist, die eine Mehrzahl von flächenintensiven Füßen (6) umfasst, wobei das freie Ende von jedem der Füße (6) ein Befestigungsdurchgangsloch (9) umfasst, wobei ein Befestigungszapfen (10), der zum Befestigen der Vorrichtung zum Auffangen eines Gasstroms am Boden vorgesehen ist, durch jedes der Befestigungsdurchgangslöcher (9) hindurchgeführt ist.

3. Vorrichtung zum Auffangen eines Gasstroms nach Anspruch 1 oder 2, ***dadurch gekennzeichnet*, *dass*** wenigstens einer der Befestigungszapfen (10) als ein Temperatur- und/ oder Feuchtigkeitssensor für den Boden ausgebildet ist, aus dem der Gasstrom erfasst wird.

## Revendications

1. Appareil pour capturer un flux gazeux, en particulier un flux gazeux provenant du sol, de préférence un flux gazeux issu d'une décomposition naturelle des substances organiques dans le sol, telles que des racines de plantes mortes et analogues, comprenant une chambre pour capturer un flux gazeux (4), une base d'appui (1) formée avec une ouverture circulaire (7) ménagée approximativement dans une zone centrale de ladite base d'appui (1), ladite ouverture (7) étant entourée, sur toute la zone de bord de celle-ci, d'un joint d'étanchéité (8) pour coopérer avec ladite chambre (4), un support supérieur (2) et un dispositif pour commander et actionner ladite chambre (4),
***caractérisé par le fait que*** ledit appareil comprend des guides de type barre (3) comprenant au moins trois barres (11) disposées autour de ladite ouverture (7) d'une manière telle qu'elles sont équidistantes sur la circonférence de ladite ouverture (7) et s'étendent mutuellement en parallèle dans la zone entre ladite base d'appui (1) et ledit support supérieur (2), la chambre (4) pour capturer un flux gazeux étant guidée au moyen desdits guides (3).

2. Appareil pour capturer un flux gazeux selon la revendication 1, ***caractérisé par le fait que*** la base d'appui (1) se présente sous la forme d'une base d'appui symétrique comprenant une pluralité de pieds d'extension de surface (6), l'extrémité libre de chaque pied (6) comprend un trou traversant de fixation (9), un tenon de fixation (10) destiné à fixer au sol ledit appareil pour capturer un flux gazeux, en étant placé à travers chaque trou traversant de fixation précité (9).

3. Appareil pour capturer un flux gazeux selon les revendications 1 à 2, ***caractérisé par le fait qu'***au moins un desdits tenons de fixation (10) est formé par un capteur de température et/ou d'humidité du sol à partir duquel le flux gazeux est capturé.
